# FASCICULE DE BREVET EUROPEEN

(11) **EP 1 412 300 B1**
(45) Date de publication et mention de la délivrance du brevet: **24.06.2020**
(21) Numéro de dépôt: 02774837.5
(22) Date de dépôt: 25.07.2002
(51) Int. Cl.: C03C 17/36

(54) **VITRAGE MUNI D'UN EMPILEMENT DE COUCHES MINCES REFLECHISSANT LES INFRAROUGES ET/OU LE RAYONNEMENT SOLAIRE**
MIT EINER INFRAROTSTRAHLUNG UND/ODER SONNENSTRAHLUNG REFLEKTIERENDEN DÜNNSCHICHTBEKLEIDUNG VERSEHENE VERGLASUNG
GLAZING PROVIDED WITH STACKED THIN LAYERS REFLECTING INFRARED RAYS AND/OR SOLAR RADIATION

(30) Priorité: 25.07.2001 FR 0109900
(43) Date de publication de la demande: 28.04.2004
(73) Titulaire: SAINT-GOBAIN GLASS FRANCE, 92400 Courbevoie (FR)
(72) Inventeur: NADAUD, Nicolas, F-94250 Gentilly (FR); BILLERT, Ulrich, 52066 Aachen (DE); SCHÜTT, Jürgen, 52070 Aachen (DE); YU, Li-Ming, B-5000 Namur (BE)
(74) Mandataire: Saint-Gobain Recherche
(86) Numéro de dépôt international: PCT/FR2002/002674
(87) Numéro de publication internationale: WO 2003/010105

(56) Documents cités:
- EP-A- 0 638 528
- EP-A- 0 844 219
- EP-A- 0 847 965
- EP-A- 1 010 677
- US-A- 6 007 901

## Description

L'invention concerne les substrats transparents, de préférence rigides du type verre, qui sont munis d'empilements de couches minces comprenant au moins une couche à comportement métallique pouvant agir sur le rayonnement solaire et/ou le rayonnement infrarouge de grande longueur d'onde, en vue de constituer des vitrages.

L'invention s'intéresse aux empilements alternant des couches à base d'argent et des couches en matériau diélectrique du type oxyde métallique ou nitrure de silicium, permettant de conférer aux vitrages des propriétés de protection solaire ou de basse émissivité (double-vitrage de bâtiment, pare-brise feuilleté de véhicule, ...). Elle s'intéresse plus particulièrement aux substrats verriers munis de tels empilements et qui doivent subir des opérations de transformation impliquant un traitement thermique à au moins 500°C : il peut notamment s'agir d'une trempe, d'un recuit ou d'un bombage.

Plutôt que de déposer les couches sur le verre après son traitement thermique (ce qui pose des problèmes technologiques importants), on a, dans un premier temps, cherché à adapter les empilements de couches pour qu'ils puissent subir de tels traitements tout en gardant l'essentiel de leurs propriétés thermiques. Le but était donc d'éviter la détérioration des couches fonctionnelles, les couches d'argent notamment. Une solution, exposée dans le brevet EP-506 507, consiste à protéger les couches d'argent en les encadrant par des couches métalliques venant protéger les couches d'argent. On a alors un empilement bombable ou trempable, dans la mesure où il est au moins aussi performant dans la réflexion des infrarouges ou du rayonnement solaire avant qu'après le bombage ou la trempe. Cependant, l'oxydation / la modification des couches ayant protégé les couches d'argent sous l'effet de la chaleur conduisent à modifier sensiblement les propriétés optiques de l'empilement, notamment en induisant une augmentation de la transmission lumineuse et une modification de la colorimétrie en réflexion. Et ce chauffage tend également à créer des défauts optiques : des piqûres et/ou diverses altérations de petite taille conduisant à un niveau de flou significatif (on entend généralement par "altérations de petite taille" des défauts de taille inférieure à 5 micromètres, tandis que des "piqûres" s'entendent par des défauts de taille au-delà de 50 micromètres, notamment entre 50 et 100 micromètres, avec bien sûr la possibilité d'avoir également des défauts de taille intermédiaire, c'est-à-dire entre 5 et 50 micromètres).

Dans un second temps, on a alors cherché à mettre au point de tels empilements de couches minces qui soient capables de conserver à la fois leurs propriétés thermiques et leurs propriétés optiques après traitement thermique, en minimisant toute apparition de défauts optiques. L'enjeu était d'avoir ainsi des empilements de couches minces à performances optiques/thermiques fixes, qu'ils aient ou non à subir des traitements thermiques.

Une première solution a été proposée dans le brevet EP-718 250. Elle préconise d'utiliser au-dessus de la ou des couches fonctionnelles à base d'argent des couches-barrière à la diffusion de l'oxygène, notamment à base de nitrure de silicium, et de déposer directement les couches d'argent sur le revêtement diélectrique sous-jacent, sans interposition de couches de primage ou de couches métalliques de protection. Elle propose des empilements du type :

Si₃N₄/ZnO/Ag/Nb/ZnO/Si₃N₄

ou

SnO₂/ZnO/Ag/Nb/Si₃N₄

Une seconde solution a été proposée dans le brevet EP-847 965 : elle est davantage axée sur des empilements comprenant deux couches d'argent, et décrit l'utilisation à la fois d'une couche-barrière au-dessus des couches d'argent (comme précédemment) et d'une couche absorbante ou stabilisante, adjacente auxdites couches d'argent et permettant de les stabiliser.

Elle décrit des empilements du type

SnO₂/ZnO/Ag/Nb/Si₃N₄/ZnO/Ag/Nb/WO₃ ou ZnO ou SnO₂/Si₃N₄

Dans les deux solutions, on remarque la présence de la couche métallique, en niobium en l'occurrence, sur les couches d'argent, permettant d'éviter aux couches d'argent le contact avec une atmosphère réactive oxydante ou nitrurante lors du dépôt par pulvérisation réactive respectivement de la couche de ZnO ou de la couche de Si₃N₄.

Ces solutions sont satisfaisantes dans la plupart des cas. Cependant, on a de plus en plus besoin d'avoir des verres aux galbes très prononcés et/ou de forme complexe (double courbure, courbure en forme de S ...). C'est tout particulièrement le cas des verres servant à faire des pare-brise automobiles ou des vitrines. Et dans ce cas, on impose aux verres des traitements localement différenciés, sur le plan thermique et/ou mécanique, comme cela est notamment décrit dans les brevets FR- 2 599 357, US-6 158 247, US-4 915 722 ou US-4 764 196. Cela est particulièrement sollicitant pour les empilements de couches minces : on peut alors avoir l'apparition de défauts optiques localisés, de légères variations d'aspect en réflexion d'un point à un autre du vitrage.

L'invention a alors pour but de pallier cet inconvénient en cherchant à améliorer les empilements de couches minces décrits plus haut, notamment en cherchant à améliorer leur comportement face à des traitements thermiques sollicitants du type bombage et/ou trempe. L'invention vise notamment à conserver les performances thermiques des empilements, à minimiser toute modification optique de ceux-ci, toute apparition de défauts optiques. Elle cherche plus particulièrement à conserver l'homogénéité d'aspect optique des verres revêtus après traitement thermique, d'un verre à un autre et/ou d'une zone à une autre d'un même verre, et ceci même en cas de traitement localement différencié d'un point à un autre du vitrage. Il s'agit notamment de limiter au mieux toute variation optique d'un point à un autre du vitrage, notamment, dans le cas d'un verre devant être bombé, d'une zone faiblement ou non bombée à une zone fortement bombée.

L'invention a tout d'abord pour objet un substrat selon la revendication 1 et les revendications dépendantes présentent des modes avantageux. Ce substrat transparent, en verre, est muni d'un empilement de couches minces comportant une alternance de n couches fonctionnelles A à propriétés de réflexion dans l'infrarouge et/ou dans le rayonnement solaire, métalliques, et de n+1 revêtements B avec n ≥ 1. Lesdits revêtements B comportent une ou une superposition de couches en matériau diélectrique, de manière à ce que chaque couche fonctionnelle A soit disposée entre deux revêtements B. L'empilement présente en outre les caractéristiques suivantes : au moins une des couches fonctionnelles A est (i) directement en contact avec le revêtement diélectrique B disposé au-dessus d'elle, et (ii) en contact avec le revêtement diélectrique B disposé au-dessous d'elles par l'intermédiaire d'une couche C absorbante au moins dans le visible, du type métallique éventuellement nitruré. En outre, selon l'invention :
(i) - la ou chacune des couches fonctionnelles A est directement en contact avec le revêtement diélectrique B disposé au-dessus d'elle,
(ii) - la ou chacune des couches fonctionnelles A est en contact avec le revêtement diélectrique B disposé au-dessous d'elles par l'intermédiaire d'une couche C absorbante au moins dans le visible, du type métallique éventuellement nitruré.

L'invention va ainsi à l'encontre de ce qui se fait usuellement, puisqu'elle supprime la couche métallique « sacrificielle » au-dessus des couches fonctionnelles, en argent notamment, et qu'elle la déplace pour la disposer en-dessous de celles-ci. En fait, de façon surprenante, il a été montré qu'une fine couche métallique sous une couche fonctionnelle aidait grandement à la stabiliser pendant les traitements thermiques, même les plus sollicitants, et ceci de façon plus efficace que dans une configuration où elle se trouverait au-dessus des couches fonctionnelles (dans tout le reste du texte, on parlera indifféremment de couche Ag ou de couche fonctionnelle A, par souci de concision, sachant que les couches en argent sont les plus usuelles pour les applications envisagées dans l'invention, mais l'invention s'applique de façon identique à d'autres couches métalliques réfléchissantes, comme des alliages d'argent, contenant notamment du titane ou du palladium).

En effet, il est possible, lors de la fabrication de l'empilement, d'éviter la détérioration de l'Ag pendant le dépôt de la couche suivante en oxyde ou en nitrure par pulvérisation réactive. Différentes possibilités seront détaillées par la suite. En outre, la présence de cette couche "sacrificielle" pendant le traitement thermique de l'empilement tend à entraîner plus de flou que dans une configuration où elle se trouverait en-dessous des couches fonctionnelles. Elle tend de fait à abaisser la qualité optique de l'empilement après traitement thermique.

Cette configuration particulière des couches Ag a permis de supprimer l'essentiel des défauts optiques, notamment un défaut de type voile, sur l'empilement de couches minces après traitement thermique.

L'épaisseur de la ou des couches absorbantes C est inférieure à 1 nm, notamment inférieure ou égale à 0,7 ou 0,6 ou 0,5 nm. Elle est par exemple d'environ 0,2 à 0,5 nm. Le terme de « couche » est alors à prendre au sens large. En effet, des couches si minces peuvent ne pas être continues, elles forment davantage des îlots sur la couche sous-jacente.

Cette extrême minceur a plusieurs atouts : la couche peut jouer son rôle de "piège" vis-à-vis d'espèces agressives à l'encontre du matériau de la couche fonctionnelle A, en l'occurrence de l'argent pendant les traitements thermiques. Par contre, elle ne pénalise que très peu l'empilement en termes de perte de transmission lumineuse, et elle se dépose vite par pulvérisation cathodique. Plus important peut-être, le cas échéant : sa minceur fait qu'elle « n'interfère pas » (ou très peu) sur l'interaction entre la couche Ag et la couche qui se trouve sous cette couche absorbante.

Si cette couche sous-jacente a un effet « mouillant » vis-à-vis de la couche Ag (par exemple quand il s'agit de couches à base d'oxyde de zinc comme cela sera détaillé plus loin), celle-ci pourra conserver cet effet avantageux malgré la présence de la couche intermédiaire absorbante.

L'invention a aussi pour objet ledit substrat, en verre, comprenant au moins deux couches fonctionnelles A alternant avec des revêtements B comme explicité plus haut (on est dans le cas où n ≥ 2). L'empilement comprend également des couches C absorbantes au moins dans le visible, l'épaisseur totale de ces couches C étant inférieure ou égale à 2,5 nm, notamment inférieure ou égale à 2 ou à 1,8 ou à 1,4 nm. De préférence, ces couches C sont disposées entre les couches fonctionnelles A et les revêtements B qui se trouvent au-dessous d'elles. Ces couches sont notamment métalliques, éventuellement nitrurées.

Dans une configuration à plusieurs couches absorbantes C, on a de préférence la couche C la plus éloignée du substrat qui est plus épaisse que les autres. On peut avoir un gradient dans les épaisseurs des couches C : plus elles s'éloignent de leur substrat porteur, plus elles sont épaisses. Cela peut se justifier par le fait que la dernière couche absorbante C peut ainsi aider à protéger les couches fonctionnelles A qui ont été déposées avant elles. Dans un empilement avec deux couches C et deux couches A, on peut aussi avoir un rapport d'épaisseur entre la seconde couche absorbante et la première aux environs des 2/3 - 1/3 (par exemple de 75-25 à 55-45 en pourcentage d'épaisseur).

La ou les couches C absorbantes selon l'invention sont à base de titane Ti, de nickel Ni, de chrome Cr, de niobium Nb, de zirconium Zr ou d'un alliage métallique contenant au moins l'un de ces métaux : le titane s'est avéré particulièrement approprié.

Avantageusement, au moins un (en particulier chacun) des revêtements B qui se trouve directement au-dessus d'une couche fonctionnelle A commence par une couche D à base d'oxyde(s) métallique(s). Cela revient à dire qu'il y a un contact direct entre la ou chacune des couches fonctionnelles et la couche d'oxyde(s) métallique(s) qui la surmonte (ou au moins pour l'une des couches fonctionnelles).

Cette couche d'oxyde peut remplir la fonction de stabilisation mentionnée dans le brevet EP-847 965 précité. Elle peut permettre de stabiliser l'argent, en particulier en cas de traitement thermique. Elle tend aussi à favoriser l'adhésion de l'ensemble de l'empilement. De préférence, il s'agit d'une couche à base d'oxyde de zinc ou d'un oxyde mixte de zinc et d'un autre métal (du type Al). Il peut aussi s'agir d'oxydes comprenant au moins un des métaux suivants : Al, Ti, Sn, Zr, Nb, W, Ta. Un exemple d'oxyde mixte de zinc susceptible d'être déposé en couche mince selon l'invention est un oxyde mixte de zinc et d'étain contenant un élément additionnel tel que de l'antimoine, tel que décrit dans WO 00/24686.

Quand on dépose l'ensemble des couches par pulvérisation cathodique, des précautions sont nécessaires pour que le dépôt de la couche d'oxyde ne détériore pas la couche Ag sous-jacente. En fait, il est préférable que l'oxyde soit déposé de façon à être (légèrement) sous-stoechiométrique en oxygène, tout en restant en-deça du seuil en dessous duquel la couche d'oxyde deviendrait absorbante dans le visible. S'il s'agit de ZnOx (ou d'un oxyde mixte), il est ainsi préférable que x soit légèrement inférieur à 1 (par exemple de 0,88 à 0,98, notamment de 0,90 à 0,95). Le contrôle de la stoechiométrique en oxygène peut se faire de différentes façons : on peut utiliser un mode de dépôt par contrôle du plasma dit P.E.M. (Plasma Emission Monitoring). On peut aussi utiliser une pulvérisation non réactive en utilisant une cible d'oxyde, une cible de céramique à base de zinc et d'oxygène et éventuellement d'aluminium par exemple.

Cette couche D est de préférence d'épaisseur limitée ; elle est par exemple de 2 à 30 nm, notamment de 5 à 10 nm.

Avantageusement encore, au moins un (en particulier chacun) des revêtements B qui se trouve en dessous d'une couche fonctionnelle A se termine par une couche D' à base d'oxyde(s) métallique(s). Il peut s'agir du même oxyde de zinc ou oxyde mixte contenant du zinc que pour les couches D décrites plus haut. Par contre, il n'est pas nécessaire ici d'en contrôler la stoechiométrie en oxygène aussi précisément : les couches peuvent être des couches stoechiométriques. Les couches contenant du ZnO sont particulièrement intéressantes, car elles ont la propriété de bien mouiller l'argent, de faciliter sa croissance cristalline dans la mesure où le ZnO et l'argent cristallisent de façon similaire avec des paramètres de maille proches : l'argent va pouvoir croître de façon colonnaire sur une couche bien cristallisée. La cristallisation de l'oxyde de zinc se transfère alors à l'argent par un phénomène connu sous le terme d'hétéroépitaxie. Ce transfert de cristallisation, cette mouillabilité entre la couche contenant le ZnO et la couche Ag sont maintenus malgré l'interposition d'une couche absorbante C dans la mesure où cette dernière est suffisamment mince (au plus 1 nm). La couche D' a de préférence une épaisseur comprise entre 6 et 15 nm.

En résumé, les couches C stabilisent les couches d'Ag lors de traitements thermiques, sans diminuer leur aptitude à cristalliser et sans induire une absorption lumineuse trop forte, si l'on sélectionne de façon appropriée leur localisation et leur épaisseur. Les couches D' peuvent favoriser le nappage /la cristallisation des couches Ag (ce qui limite du même coup une cristallisation post-dépôt de l'argent, sous l'effet d'un traitement thermique, pouvant conduire à une évolution de ses propriétés), et les couches D peuvent servir à stabiliser l'argent, l'empêcher notamment de migrer sous forme d'îlots.

Pour éviter que les couches Ag ne se détériorent par diffusion à chaud d'oxygène provenant de l'atmosphère ambiante, il est prévu ou au moins dans le (n + 1)^{ème} revêtement B (c'est-à-dire le dernier en comptant à partir du substrat), une couche apte à faire barrière à l'oxygène. Il s'agit de couches à base de nitrure d'aluminium et/ou de nitrure de silicium. Avantageusement, tous les revêtements B comprennent une telle couche-barrière. De cette façon, chacune des couches fonctionnelles A se trouve encadrée par deux couches-barrières à l'oxygène, mais qui peuvent aussi, éventuellement, être des barrières à la diffusion d'espèces migrant du verre, des alcalins notamment. De préférence, ces couches-barrières ont une épaisseur d'au moins 5 nm, notamment d'au moins 10 nm, par exemple comprise entre 15 et 50 nm ou entre 20 et 40 ou entre 22 et 30 nm quand elles ne se trouvent pas entre deux couches fonctionnelles. Elles sont de préférence d'une épaisseur sensiblement plus importante quand elles se trouvent entre deux couches fonctionnelles, en étant notamment d'une épaisseur d'au moins 10 nm, notamment d'au moins 40 nm, par exemple comprise entre 40 et 50 ou 70 nm.

Dans le cas d'un empilement comprenant au moins deux couches fonctionnelles A (n ≥ 2) il est préférable qu'un revêtement B situé entre deux couches A (notamment le nième) soit relativement épais par exemple d'une épaisseur de l'ordre de 50 à 90 nm, en particulier de 70 à 90 nm.

Ce revêtement B peut inclure une couche-barrière à la diffusion telle que décrite ci-dessus d'une épaisseur de 0 à 70 nm, ou 0 à 65 nm, notamment de 2 à 35 nm, en particulier de 5 à 30 nm, le cas échéant associée à une couche d'oxyde D et/ou D' d'épaisseur(s) adaptée(s), notamment d'une couche D et/ou d'une couche D' d'une épaisseur totale de 15 à 90 nm, en particulier de 35 à 90 nm, notamment de 35 à 88 nm, plus particulièrement de 40 à 85 nm.

Un mode de réalisation non limitatif de l'invention consiste à prévoir un empilement comprenant une ou deux fois la séquence :

... /ZnO/Ti/Ag/ZnO/...

le ZnO pouvant contenir un autre métal minoritaire par rapport à Zn du type Al, et le ZnO au-dessus de la couche Ag étant de préférence légèrement sous-stoechiométrique en oxygène (tout du moins avant traitement thermique post-dépôt).

On peut avoir deux fois cette séquence, dans un empilement du type :
Substrat/Si₃N₄ ⁽¹⁾/ZnOlTilAg/ZnO/Si₃N₄ ⁽²⁾/ZnO/Ti/Ag/ZnO/Si₃N₄⁽³⁾
le Si₃N₄ pouvant contenir un autre métal ou élément minoritaire par rapport au Si, comme un métal (Al) ou du bore et le ZnO pouvant contenir un métal minoritaire également.

On peut, en variante, supprimer les couches (1) et/ou (2) de Si₃N₄, par exemple en les remplaçant par une couche d'oxyde (SnO₂, oxyde mixte de zinc et d'étain ...) ou en épaississant en conséquence la couche de ZnO qui leur est adjacente.

De préférence, dans ce type d'empilement à deux couches d'argent, la couche à base de Si₃N₄ entre les deux couches d'argent est par exemple d'au moins 50 nm, notamment d'une épaisseur comprise entre 55 et 70 nm. Du côté opposé à chacune des couches d'argent, il est préférable de prévoir des couches à base de Si₃N₄ d'au moins 15 nm, notamment d'une épaisseur comprise entre 20 et 30 nm.

Avec une telle configuration d'empilement, les substrats revêtus selon l'invention peuvent subir des traitements de plus de 500°C en vue d'un bombage, d'une trempe ou d'un recuit notamment (même des traitements de bombage différenciés d'un point à un autre du substrat), avec une variation de transmission lumineuse ΔT_{L} (mesurée selon l'Illuminant D65) entre avant et après le bombage d'au plus 5 %, notamment d'au plus 4 % et/ou une variation de colorimétrie en réflexion ΔE* entre avant et après le bombage d'au plus 4, notamment d'au plus 3. ΔE est exprimé de la façon suivante dans le système de colorimétrie L, a*, b* : ΔE = (ΔL*² + Δa*² + Δb*²)^{½}. Ces valeurs de ΔE et de ΔT_{L} sont notamment vérifiées pour des vitrages à structure feuilletée du type :
verre/feuille thermoplastique comme du PVB/empilement de couches /verre.

En outre, on remarque une remarquable homogénéité d'aspect sur toute la surface du substrat revêtu.

Le substrat (en verre) revêtu peut ensuite être monté en vitrage feuilleté, en l'associant de façon connue avec un autre verre par l'intermédiaire d'une feuille au moins en polymère thermoplastique. L'empilement est disposé de façon à être en contact avec ladite feuille thermoplastique, à l'intérieur du vitrage. Il présente une adhérence satisfaisante à ladite feuille. Il peut aussi être monté en vitrage feuilleté dit asymétrique, en l'associant avec au moins une feuille de polymère du type polyuréthane à propriétés d'absorption d'énergie éventuellement associée à une autre couche de polymère à propriétés auto-cicatrisante (on peut se reporter aux brevets EP-132 198, EP-131 523 et EP-389 354 pour plus de détails sur ce type de feuilleté). Le vitrage feuilleté obtenu peut être utilisé comme pare-brise ou vitre latérale de véhicules.

Des vitrages feuilletés ainsi constitués manifestent une variation colorimétrique faible entre l'incidence normale et une incidence non normale, typiquement à 60°. Cette variation colorimétrique à incidence non normale s'exprime à partir des paramètres a*(0°), b*(0°) mesurés sous incidence de 0° (normale) et a*(60°), b*(60°) mesurés sous incidence de 60°. On note Δa*_{(0→60)}= a*(60°) - a*(0°) et Δb*_{(0→60)}= b*(60°) - b*(0°). On observe les variations colorimétriques suivantes : Δa*_{(0→60)} < 4 Δb*_{(0→60)} < 2 pour a*(60°) < 0 et b*(60°) < 0.

Ainsi, pour un vitrage pour lequel a*(0°) est compris entre -6 et -3,5 et b*(0°) est compris entre -3 et 0, l'observation sous incidence de 60° donne une faible variation de couleur avec a*(60°) compris entre -4 et 0 et b*(60°) compris entre -4 et 0.

Le substrat revêtu peut aussi être utilisé en vitrage monolithique (seul) ou être associé à un autre verre au moins par une lame de gaz pour faire un vitrage multiple isolant (double vitrage). Dans ce cas, l'empilement fait de préférence face à la lame de gaz intermédiaire.

Comme évoqué plus haut, une application particulièrement visée dans l'invention concerne les vitrages pour véhicule, notamment les pare-brise et les vitres latérales. Grâce à l'empilement de couches selon l'invention, les pare-brise et latérales peuvent avoir des propriétés antisolaires remarquables. Ils peuvent aussi servir de vitrages chauffants, dégivrants notamment, en prévoyant les amenées de courant appropriées et en adaptant la résistance des couches (résistance par carré R)..

Avantageusement, le substrat subit, une fois muni de l'empilement de couches minces, un traitement thermique à plus de 500°C en vue d'un bombage, avec après bombage une couleur en réflexion extérieure dans les bleus, dans les verts ou dans les bleu-verts.

L'invention sera décrite à présent de façon plus détaillée à l'aide des exemples suivants non limitatifs.

Dans tous les exemples suivants, les couches sont déposées par pulvérisation cathodique assistée par champ magnétique , sur un verre clair silico-sodo-calcique de 2,1 mm d'épaisseur de type Planilux (verre commercialisé par Saint Gobain Glass).

Les couches à base de nitrure de silicium sont déposées à partir de cibles de Si dopé Al ou B en atmosphère nitrurante. Les couches à base d'Ag sont déposées à partir de cibles Ag en atmosphère inerte, et les couches à base de Ti à partir de cible de Ti en atmosphère inerte également. Les couches en ZnO sont déposées à partir de cibles de Zn contenant de 1 à 4 % d'Al en poids. Celles situées en dessous des couches d'Ag ont une stoechiométrie en oxygène standard, celles déposées directement sur les couches d'argent sont légèrement sous-stoechiométriques en oxygène tout en restant transparentes dans le visible, le contrôle de la stoechiométrie s'effectuant par P.E.M.

### EXEMPLES 1 et 2

Ces exemples ont trait à l'empilement suivant :
Verre/Si₃N₄:Al/ZnO:Al/Ti/Ag/ZnO₁₋ₓAl/Si₃N₄:Al/ZnO:Al/Ti/Ag/ZnO₁₋ₓ:Al/Si₃N₄:Al Si₃N₄:Al signifie que le nitrure contient de l'aluminium. Il en est de même pour ZnO:Al. ZnO₁₋ₓ:Al signifie en outre que l'oxyde est déposé en légère sous-stoechiométrie d'oxygène, sans être absorbant dans le visible.

Le tableau 1 suivant récapitule l'empilement de couches, avec les épaisseurs indiquées en nanomètres pour chacun des deux exemples:

**Tableau 1**

| verre | **Exemple 1** | **Exemple 2** |
|---|---|---|
| Si₃N₄: Al | 22,5 nm | 22,5 nm |
| ZnO : Al | 8 nm | 8 nm |
| Ti | 0,4 nm | 0,5 nm |
| Ag | 8,7 nm | 8,7 nm |
| ZnO₁₋ₓ:Al | 6 nm | 6 nm |
| Si₃N₄: Al | 62 nm | 62 nm |
| ZnO : Al | 10 nm | 10 nm |
| Ti | 0,6 nm | 0,5 nm |
| Ag | 9,7 nm | 9,7 nm |
| ZnO₁₋ₓ : Al | 5 nm | 5 nm |
| Si₃N₄: Al | 26 nm | 26 nm |

### EXEMPLES 3 et 4 COMPARATIFS

Ils sont identiques à l'exemple 1, à part la caractéristique suivante : on a supprimé les couches en Ti sous les couches d'argent. On a par contre ajouté des couches de Ti au-dessus de chacune des couches d'argent. Le tableau 2 suivant l'empilement de couches, avec les épaisseurs indiquées en nanomètres pour chacun des deux exemples:

**Tableau 2**

| verre | **Exemple 3 comp.** | **Exemple 4 comp.** |
|---|---|---|
| Si₃N₄: Al | 22,5 nm | 22,5 nm |
| ZnO : Al | 8 nm | 8 nm |
| Ag | 8,7 nm | 8,7 nm |
| Ti | 0,5 nm | 1 nm |
| ZnO₁₋ₓ:Al | 6 nm | 6 nm |
| Si₃N₄: Al | 62 nm | 62 nm |
| ZnO : Al | 10 nm | 10 nm |
| Ag | 9,7 nm | 9,7 nm |
| Ti | 0,5 nm | 0,5 nm |
| ZnO₁₋ₓ : Al | 5 nm | 5 nm |
| Si₃N₄: Al | 26 nm | 26 nm |

### EXEMPLE 5 COMPARATIF

L'empilement de couches est le même qu'à l'exemple 1, mais les deux couches de ZnO :AI au-dessus des couches d'argent ont cette fois une stoechiométrie en oxygène différente de celle de l'exemple 1: ces couches sont en ZnO₁₊ₓ:Al, cette écriture traduisant le fait que ces couches sont en sur-stoechiométrie en oxygène (telles que déposées, avant traitement thermique)

### EXEMPLE 6 COMPARATIF

L'empilement est le même qu'à l'exemple 1, mais les deux couches de ZnO_{1-y}:Al au-dessus des couches d'Ag sont nettement plus sous-stoechiométriques en oxygène : elles commencent à être absorbantes.

### EXEMPLE 7

L'empilement est le même qu'à l'exemple 1, mais l'ensemble des couches à base de ZnO:Al, donc à la fois les couches sur les couches d'argent et sous les couches d'argent, sont en légère sous-stoechiométrie en oxygène sans être absorbantes : elles sont toutes du type ZnO₁₋ₓ:Al avec la convention précédente.

### EXEMPLES 8 ET 9

Ces deux exemples reprennent le type de séquence de couches de l'exemple 1, mais toutes les couches à base de ZnO:Al sont stoechiométriques en oxyène, et les couches ont des épaisseurs un peu différentes.

Le tableau 3 suivant récapitule l'empilement de couches, avec les épaisseurs indiquées en nanomètres pour chacun de ces deux exemples:

**Tableau 3**

| verre | **Exemple 8** | **Exemple 9** |
|---|---|---|
| Si₃N₄: Al | 21,5 nm | 23 nm |
| ZnO : Al | 8 nm | 8 nm |
| Ti | 0,2 nm | 0,4 nm |
| Ag | 8,4 nm | 10,7 nm |
| ZnO:Al | 5 nm | 5 nm |
| Si₃N₄: Al | 67,1 nm | 63,5 nm |
| ZnO : Al | 8 nm | 8 nm |
| Ti | 0,2 nm | 0,6 nm |
| Ag | 10,6 nm | 11,8 nm |
| ZnO: Al | 5 nm | 5 nm |
| Si₃N₄: Al | 20,3 nm | 23 nm |

### EXEMPLES 8 BIS ET 9 BIS

Ces exemples sont identiques respectivement aux exemples 8 et 9, à la différence près que, comme dans le cas de l'exemple 1, les couches à base de ZnO₁₋ₓ:Al au dessus des couches d'argent sont déposées de façon à être légèrement sous-stoechiométriques en oxygène.

On a fait subir à l'ensemble de ces verres revêtus une opération de bombage globalement à plus de 500°C, avec des zones localement à forte courbure.

On a ensuite évalué la variation d'aspect des verres avant et après traitement thermique, par la mesure de la variation de transmission lumineuse ΔT_{L} en pourcentage (variation moyennée selon l'Illuminant D 65) et de la variation d'aspect ΔE (sans unité) en réflexion extérieure (dont la formule a été rappelée plus haut). On a aussi évalué la qualité optique globale du verre après traitement thermique, en observant s'il y a eu apparition de défauts localisés ou non du type piqûres, flou.

On a ensuite monté chacun des verres bombés en vitrages feuilletés à l'aide d'un second verre identiquement bombé mais dépourvu de couches minces et d'une feuille de polyvinylbutyral PVB de 0,76 mm d'épaisseur, de façon à ce que l'empilement soit en face 3 (en considérant le feuilleté comme un pare-brise déjà monté dans la voiture, en numérotant la face des verres en partant de la face la plus extérieure par rapport à la voiture).

On leur à fait ensuite subir le test d'adhésion mécanique connu sous le nom de test Pummel, consistant à évaluer l'adhésion entre le PVB et chacun des verres (sachant que la présence des couches à l'interface verre/PVB peut la modifier de façon négative). Ce test consiste à disposer les verres dans une enceinte réfrigérée à -20°C pendant quatre heures, puis à prendre un marteau de 500 grammes à tête hémisphérique et à en frapper le verre dès sa sortie de l'enceinte réfrigérée, le verre étant posé sur un chevalet penché à 45° par rapport à l'horizontale et installé de façon à ce que le plan médian du verre fasse un angle de 5° avec le plan d'inclinaison du chevalet (le verre est posé sur le chevalet en le maintenant appuyé par sa base seulement contre le chevalet.) Le vitrage feuilleté est frappé avec le marteau selon une ligne parallèle à la base du verre. On estime ensuite l'adhésion par comparaison avec des spécimens, une fois que les vitrages feuilletés sont à nouveau à température ambiante. Le "score" des vitrages est ensuite évalué :
- entre 0 et 1, on a un vitrage feuilleté sans adhésion verre/PVB
- entre 2 et 3, l'adhésion est moyenne
- entre 4 et 6, l'adhésion est optimale
- au-delà de 6 elle est trop importante, ce qui n'est pas satisfaisant en termes de sécurité.

Les résultats sont indiqués dans le tableau 4 ci-dessous pour certains des exemples.

**Tableau 4**

| | **Qualité optique après traitement thermique** | **Résultat au test Pummel** | **ΔT_{L}** | **ΔE** |
|---|---|---|---|---|
| **Exemple 1** | Très bonne qualité | 4 | 4 | 3 |
| **Exemple 2** | Bonne qualité | 4 | 4 | 3 |
| **Exemple 3** | Flou | 4 | 4 | 3 |
| **Exemple 4** | Flou | 1 | >4 | >3 |
| **Exemple 5** | Flou, piqûres | 1 | 4 | 3 |
| **Exemple 6** | Flou | 1 | 4-5 | 3-4 |
| **Exemple 7** | Bonne qualité | 4 | 4-5 | >4 |

En ce qui concerne les exemples 8 , 8 bis, 9 et 9 bis, leur qualité optique après bombage est jugée également satisfaisante, les exemples 8 bis et 9 bis étant respectivement un peu meilleurs que les exemples 8 et 9. Les valeurs de transmission lumineuse T_{L} (toujours selon l'Illuminant D 65) en %, de réflexion lumineuse côté extérieur Rₑₓₜ également en %, les valeurs de L*, a* et b* en réflexion extérieure (sans unité) pour les vitrages feuilletés utilisant les verres revêtus selon les exemples 8 bis et 9 bis sont données dans le tableau 5 ci-dessous :

**Tableau 5**

| | **EXEMPLE 8 bis** | **EXEMPLE 9 bis** |
|---|---|---|
| **T_{L}** | 77,12 | 75,4 |
| **Rₑₓₜ** | 30,0 | 32,2 |
| **L*** | 40,9 | 40,4 |
| **a*** | - 6,02 | -2,3 |
| **b*** | - 2,06 | -5,1 |

De ce tableau, on peut voir que le vitrage feuilleté selon l'exemple 8 bis a une couleur en réflexion extérieure dans les verts (résultats colorimétriques quasiment identiques à ceux de l'exemple 8 dans les mêmes conditions). Le vitrage feuilleté selon l'exemple 9 bis est plutôt dans les bleus en réflexion extérieure (tout comme le vitrage feuilleté selon l'exemple 9) : ces deux couleurs sont particulièrement recherchées pour les parebrise et vitres latérales de voitures. On peut ainsi moduler l'aspect en réflexion extérieure des vitrages selon l'invention, afin d'obtenir des couleurs agréables et/ou assorties à la couleur de la carrosserie par exemple (bleu, vert, bleu-vert notamment). Cet ajustement colorimétrique se fait notamment en réglant l'épaisseur des couches de diélectriques, plus particulièrement dans le cas des exemples ci-dessus, l'épaisseur des couches à base de nitrure de silicium.

Ces exemples montrent l'importance de la nature des couches qui sont en contact direct avec les couches d'Ag : on voit qu'il est plus avantageux que les couches de Ti soient en dessous et non au-dessus des couches d'Ag (exemples 1 et 2 d'une part, 3 et 4 d'autre part), et qu'elles restent minces, avec un avantage à choisir la seconde plus épaisse que la première, à épaisseur totale de Ti égale (comparaison des exemples 1 et 2).

On vérifie aussi l'avantage à contrôler précisément la stoechiométrie de l'oxyde métallique contigu aux couches d'argent : une sur-oxydation au dépôt des couches à base de ZnO sur l'argent est néfaste à tous points de vue, comme le montre l'exemple 5.

Parmi les exemples figurant dans le tableau 4, en termes de qualité optique après bombage et de résultat au test Pummel, les exemples 1, 2 et 7 sont clairement les meilleurs.

## Revendications

1. Substrat transparent S pour un vitrage, en verre, muni d'un empilement de couches minces déposé sur le verre et comportant une alternance de n couches fonctionnelles métalliques A à propriétés de réflexion dans l'infrarouge et/ou dans le rayonnement solaire, la ou chacune des couches fonctionnelles A étant à base d'argent ou d'alliage d'argent, notamment avec du palladium ou du titane, et de (n + 1) revêtements B avec n ≥ 1, lesdits revêtements B comportant une ou une superposition de couches en matériau diélectrique de manière à ce que chaque couche fonctionnelle soit disposée entre deux revêtements B, au moins le (n + 1)^{ème} revêtement B comprenant une couche barrière à la diffusion de l'oxygène à base de nitrure de silicium et/ou de nitrure d'aluminium, **caractérisé en ce que** : la ou chacune des couches fonctionnelles A est
(i) directement au contact avec le revêtement diélectrique B disposé au-dessus d'elle, et
(ii) en contact avec le revêtement diélectrique B disposé au-dessous d'elle par l'intermédiaire d'une couche C absorbante au moins dans le visible, du type métallique éventuellement nitrurée,
ladite ou chacune desdites couche C étant à base de titane, de nickel, de chrome, de niobium, le zirconium, ou d'un alliage métallique contenant au moins l'un de ces métaux et présentant une épaisseur inférieure à 1 nm, notamment inférieure ou égale à 0,7 ou 0,6 ou 0,5 nm.

2. Substrat selon la revendication précédente , **caractérisé en ce que** n ≥ 2, et l'épaisseur totale des couches absorbantes C est inférieure ou égale à 2,5 nm, notamment inférieure ou égale à 2 ou 1,8 nm ou 1,4 nm.

3. Substrat selon la revendication 2, **caractérisé en ce que** la couche C la plus éloignée du substrat est plus épaisse que les autres couches C.

4. Substrat selon l'une des revendications précédentes, **caractérisé en ce que** au moins un des revêtements B qui se trouve directement au-dessus d'une couche fonctionnelle A commence par une couche D à base d'oxyde(s) métallique(s).

5. Substrat selon l'une des revendications précédentes, **caractérisé en ce que** au moins un des revêtements B qui se trouve en dessous d'une couche fonctionnelle A se termine par une couche D' à base d'oxyde(s) métallique(s).

6. Substrat selon la revendication 4 ou la revendication 5, **caractérisé en ce que** la couche D et/ou la couche D' sont à base d'oxyde de zinc ou d'un oxyde mixte de zinc et d'un autre métal du type Al.

7. Substrat selon la revendication 4, **caractérisé en ce que** la couche D à base d'oxyde(s) métallique(s) est déposée de façon à être sous-stoechiométrique en oxygène, tout en restant en-deça du seuil en dessous duquel la couche deviendrait absorbante dans le visible.

8. Substrat selon la revendication 4 ou la revendication 7, **caractérisé en ce que** la couche D à base d'oxyde(s) métallique(s) a une épaisseur de 2 à 30 nm, de préférence de 5 à 10 nm.

9. Substrat selon la revendication 5 ou la revendication 6, **caractérisé en ce que** la couche D' à base d'oxyde(s) métallique(s) a une épaisseur de 6 à 15 nm.

10. Substrat selon l'une des revendications précédentes, **caractérisé en ce que** n ≥ 2, et **en ce qu'**un revêtement B situé entre deux couches A a une épaisseur de 50 à 90 nm, incluant une couche-barrière de type nitrure de silicium et/ou nitrure d'aluminium de 0 à 70 nm.

11. Substrat selon la revendication 10, **caractérisé en ce que** tous les revêtements B comprennent une couche à base de nitrure de silicium et/ou de nitrure d'aluminium.

12. Substrat selon l'une des revendications précédentes, **caractérisé en ce que** l'empilement comprend la séquence de couches suivantes :
Substrat... ZnO/Ti/Ag/ZnO avec notamment un des empilements complets suivants :
Substrat... Si₃N₄/ZnO/Ti/Ag/ZnO/Si₃N₄/ZnO/Ti/Ag/ZnO/Si₃N₄
Substrat... ZnO/Ti/Ag/ZnO/Si₃N₄/ZnO/Ti/Ag/ZnO/Si₃N₄
Substrat... ZnO/Ti/Ag/ZnO/Ti/Ag/ZnO/Si₃N₄
Substrat... Si₃N₄/ZnO/Ti/Ag/ZnO/Ti/Ag/ZnO/Si₃N₄ les couches de Si₃N₄ et/ou de ZnO pouvant contenir un élément ou un métal minoritaire par rapport au Si ou à Zn du type Al ou du bore.

13. Vitrage comprenant au moins un substrat selon l'une des revendications précédentes, **caractérisé en ce qu'il** est feuilleté, en associant le substrat en verre muni de l'empilement de couches minces avec un autre substrat en verre par au moins une feuille de polymère thermoplastique, ou en associant ledit substrat de verre muni de l'empilement de couches à au moins une feuille à propriétés d'absorption d'énergie éventuellement associée à une autre couche de polymère à propriétés auto-cicatrisante sous forme d'un vitrage feuilleté asymétrique.

14. Vitrage comprenant au moins un substrat selon l'une des revendications 1 à 12, **caractérisé en ce qu'**il s'agit d'un vitrage multiple du type double vitrage.

## Patentansprüche

1. Transparentes Substrat S aus Glas für eine Verglasung, das mit einem Stapel dünner Schichten versehen ist, die auf dem Glas abgeschieden sind und im Wechsel n metallische Funktionsschichten A mit Reflexionseigenschaften im Infrarot und/oder in der Sonnenstrahlung umfassen, wobei die oder jede der Funktionsschichten A auf Silber oder einer Silberlegierung basiert, insbesondere mit Palladium oder Titan, und von (n + 1) Beschichtungen B mit n ≥ 1, wobei die Beschichtungen B eine oder eine Überlagerung von Schichten aus dielektrischem Material umfassen, sodass jede Funktionsschicht zwischen zwei Beschichtungen B angeordnet ist, wobei mindestens die (n + 1). Beschichtung B eine Sperrschicht gegen die Diffusion von Sauerstoff auf der Basis von Siliciumnitrid und/oder von Aluminiumnitrid umfasst, **dadurch gekennzeichnet, dass:** die oder jede der Funktionsschichten A
(i) direkt in Kontakt mit der darüber angeordneten dielektrischen Beschichtung B steht und
(ii) in Kontakt mit der darunter angeordneten dielektrischen Beschichtung B mittels einer zumindest im sichtbaren Bereich absorbierenden Schicht C vom metallischen Typ steht, die nitriert sein kann,
wobei die oder jede der Schichten C auf Titan, Nickel, Chrom, Niob, Zirkonium oder einer Metalllegierung basiert, die mindestens eines dieser Metalle enthält und eine Dicke von weniger als 1 nm aufweist, insbesondere weniger oder gleich 0,7 oder 0,6 oder 0,5 nm.

2. Substrat nach dem vorhergehenden Anspruch, **dadurch gekennzeichnet, dass** n ≥ 2 ist und die Gesamtdicke der absorbierenden Schichten C kleiner oder gleich 2,5 nm ist, insbesondere kleiner oder gleich 2 oder 1,8 nm oder 1,4 nm.

3. Substrat nach Anspruch 2, **dadurch gekennzeichnet, dass** die vom Substrat am weitesten entfernte Schicht C dicker als die anderen Schichten C ist.

4. Substrat nach einem der vorhergehenden Ansprüche, **dadurch gekennzeichnet, dass** mindestens eine der Beschichtungen B, die sich direkt über einer Funktionsschicht A befindet, mit einer Schicht D auf der Basis von Metalloxid(en) beginnt.

5. Substrat nach einem der vorhergehenden Ansprüche, **dadurch gekennzeichnet, dass** mindestens eine der Beschichtungen B, die sich unterhalb einer Funktionsschicht A befindet, in einer Schicht D' auf der Basis von Metalloxid(en) endet.

6. Substrat nach Anspruch 4 oder Anspruch 5, **dadurch gekennzeichnet, dass** die Schicht D und/oder die Schicht D' auf Zinkoxid oder einem Mischoxid aus Zink und einem anderen Metall vom AI-Typ basieren.

7. Substrat nach Anspruch 4, **dadurch gekennzeichnet, dass** die Schicht D auf der Basis von Metalloxid(en) derart abgeschieden wird, dass sie in Sauerstoff substöchiometrisch ist, wobei sie unterhalb der Schwelle bleibt, unter der die Schicht im sichtbaren Bereich absorbierend werden würde.

8. Substrat nach Anspruch 4 oder Anspruch 7, **dadurch gekennzeichnet, dass** die Schicht D auf der Basis von Metalloxid(en) eine Dicke von 2 bis 30 nm, vorzugsweise 5 bis 10 nm aufweist.

9. Substrat nach Anspruch 5 oder Anspruch 6, **dadurch gekennzeichnet, dass** die Schicht D' auf der Basis von Metalloxid(en) eine Dicke von 6 bis 15 nm aufweist.

10. Substrat nach einem der vorhergehenden Ansprüche, **dadurch gekennzeichnet, dass** n ≥ 2, ist und dass eine Beschichtung B, die zwischen zwei Schichten A angeordnet ist, eine Dicke von 50 bis 90 nm beinhaltet, einschließlich einer Sperrschicht vom Siliciumnitrid- und/oder Aluminiumnitrid-Typ von 0 bis 70 nm.

11. Substrat nach Anspruch 10, **dadurch gekennzeichnet, dass** alle Beschichtungen B eine Schicht auf der Basis von Siliciumnitrid und/oder von Aluminiumnitrid umfassen.

12. Substrat nach einem der vorhergehenden Ansprüche, **dadurch gekennzeichnet, dass** der Stapel folgende Reihenfolge von Schichten umfasst:
Substrat... ZnO/Ti/Ag/ZnO mit insbesondere einem der folgenden vollständigen Stapel:
Substrat... Si₃N₄/ZnO/Ti/Ag/ZnO/Si₃N₄/ZnO/Ti/Ag/ZnO/Si₃N₄
Substrat... ZnO/Ti/Ag/ZnO/Si₃N₄/ZnO/Ti/Ag/ZnO/Si₃N₄
Substrat... ZnO/Ti/Ag/ZnO/Ti/Ag/ZnO/Si₃N₄
Substrat... Si₃N₄/ZnO/Ti/Ag/ZnO/Ti/Ag/ZnO/Si₃N₄ wobei die Schichten aus Si₃N₄ und/oder ZnO ein Element oder ein Metall enthalten können, das im Vergleich zu Si oder Zn vom Al-Typ oder von Bor geringfügig ist.

13. Verglasung, umfassend mindestens ein Substrat nach einem der vorhergehenden Ansprüche, **dadurch gekennzeichnet, dass** es laminiert ist, indem das mit dem Stapel dünner Schichten versehene Glassubstrat mit einem anderen Glassubstrat durch mindestens eine thermoplastische Polymerfolie kombiniert wird oder durch Verbinden des mit dem Stapel von Schichten versehenen Glassubstrats mit mindestens einer Schicht mit Energieabsorptionseigenschaften, die möglicherweise mit einer anderen Polymerschicht mit selbstheilenden Eigenschaften in Form einer asymmetrischen laminierten Verglasung verbunden sind.

14. Verglasung, umfassend mindestens ein Substrat nach einem der Ansprüche 1 bis 12, **dadurch gekennzeichnet, dass** es sich um eine Mehrfachverglasung vom Doppelverglasungstyp handelt.

## Claims

1. Transparent substrate S for a glazing, made of glass, provided with a stack of thin layers deposited onto the glass and comprising an alternation of n metal functional layers A having reflection properties in the infrared and/or in solar radiation, the or each of the functional layers A being based on silver or on an alloy of silver, in particular with palladium or titanium, and of (n+1) coatings B, where n ≥ 1, said coatings B comprising a layer or a superposition of layers made of a dielectric, so that each functional layer A is placed between two coatings B, at least the (n + 1)th coating B comprising an oxygen barrier layer based on silicium nitride and/or aluminium nitrire, **characterized in that:** the or each of the functional layers A is
(i) directly in contact with the dielectric coating B placed on top of it and
(ii) in contact with the dielectric coating B placed beneath it via a layer C that absorbs at least in the visible, of the metallic, optionally nitride, type,
the or each of said layer C being based on titanium, nickel, chrome, nobium, zirconium or a metal alloy containing at least one of these metals and having a thickness of less than 1 nm, in particular equal or less than 0.7 or 0.6 or 0.5 nm.

2. The glazing as claimed in claim 1, **characterized in that** n ≥ 2 and the total thickness of the absorbent layers C is less than or equal to 2.5 nm, especially less than or equal to 2 or to 1.8 or to 1.4 nm.

3. The glazing as claimed in claim 2, **characterized in that** the layer C furthest away from the substrate is thicker than the other layers C.

4. The glazing as claimed in any one of the preceding claims, **characterized in that** at least one of the coatings B lying directly on top of a functional layer A starts with a layer D based on one or more metal oxides.

5. The glazing as claimed in one of the preceding claims, **characterized in that** at least one of the coatings B lying beneath a functional layer A terminates with a layer D' based on one or more metal oxides.

6. The glazing as claimed in claim 4 or claim 5, **characterized in that** the layer D and/or the layer D' are based on zinc oxide or on a mixed oxide of zinc and another metal of the Al type.

7. The glazing as claimed in claim 4, **characterized in that** the layer D based on one or more metal oxides is deposited so as to be substoichiometric in oxygen, while still remaining below the threshold, beneath which the oxide layer would become absorbent in the visible.

8. The glazing as claimed in claim 4 or claim 7, **characterized in that** the layer D based on one or more metal oxides has a thickness of 2 to 30 nm, preferably 5 to 10 nm.

9. The glazing as claimed in claim 5 or claim 6, **characterized in that** the layer D' based on one or more metal oxides has a thickness of 6 to 15 nm.

10. The glazing as claimed in one of the preceding claims, **characterized in that** n ≥ 2 **and in that** a coating B located between two layers A has a thickness of 50 to 90 nm, including a 0 to 70 nm barrier layer of the silicon nitride and/or aluminum nitride type of 0 to 70 nm.

11. The glazing as claimed in claim 10, **characterized in that** all the coatings B include a layer based on silicon nitride and/or aluminum nitride.

12. The glazing as claimed in one of the preceding claims, **characterized in that** the stack comprises the following sequence of layers:
Substrate ...ZnO/Ti/Ag/ZnO especially with one of the following complete stacks:
Substrate ... Si₃N₄/ZnO/Ti/Ag/ZnO/Si₃N₄/ZnO/Ti/Ag/ZnO/Si₃N₄
Substrate ... ZnO/Ti/Ag/ZnO/Si₃N₄/ZnO/Ti/Ag/ZnO/Si₃N₄
Substrate ... ZnO/Ti/Ag/ZnO/Ti/Ag/ZnO/Si₃N₄
Substrate ... Si₃N₄/ZnO/Ti/Ag/ZnO/Ti/Ag/ZnO/Si₃N₄, it being possible for the Si₃N₄ and/or ZnO layers to contain an element or a metal, of the Al or boron type, in a minority proportion in relation to Si or to Zn.

13. Glazing comprising a substrate as claimed in one of the preceding claims, **characterized in that** it is laminated by combining the glass substrate, provided with the stack of thin layers, with another glass substrate via at least one sheet of thermoplastic polymer, or by combining said glass substrate, provided with the multilayer stack, with at least one sheet having energy absorption properties optionally combined with another layer of polymer having self-healing properties, in the form of an asymmetrical laminated glazing.

14. Glazing comprising a substrate as claimed in one of claims 1 to 12, **characterized in that** it is multiple glazing of the double-glazing type.
